# EUROPÄISCHE PATENTANMELDUNG

(11) **EP 3 840 283 A1**
(43) Veröffentlichungstag der Anmeldung: **23.06.2021**
(21) Anmeldenummer: 19218470.3
(22) Anmeldetag: 20.12.2019
(51) Int. Cl.: H04L 9/08, H04L 29/06

(54) **VERFAHREN ZUM ÜBERTRAGEN VON NACHRICHTEN ZWISCHEN ZWEI KOMMUNIKATIONSEINRICHTUNGEN**

(71) Anmelder: Siemens Aktiengesellschaft, 80333 München (DE)
(72) Erfinder: Aschauer, Hans, 81829 München (DE); Flor, Bernd, 91555 Feuchtwangen (DE); Heintel, Markus, 81377 München (DE); Schacherl, Wolfgang, 90768 Fürth (DE); Weichhold, Peter, 90574 Rosstal (DE); Wild, Patrick, 90762 Fürth (DE); Keil, Norbert, 90513 Zirndorf (DE)

(57) **Zusammenfassung**

In einem Verfahren zum Übertragen von Nachrichten zwischen einer ersten Kommunikationseinrichtung (100) und einer zweiten Kommunikationseinrichtung (200) mittels Ablaufsteuerung, wobei die erste und die zweite Kommunikationseinrichtung (100, 200) jeweils eine Datenverarbeitungseinheit (130, 230) mit einer ersten Recheneinheit (130R, 230R) und einer zweiten Recheneinheit (130B, 230B), einen Crypto-Prozessor (120, 220), und ein Sicherheitsmodul (110, 210), das zur Bereitstellung oder Ausführung einer kryptographischen Funktionalität für den Crypto-Prozessor (120, 220) ausgebildet und eingerichtet ist, umfasst, erfolgt die Ablaufsteuerung unter Steuerung durch das Sicherheitsmodul (110, 210) der ersten und zweiten Kommunikationseinrichtung (100, 200). Zwischen dem Sicherheitsmodul (110) der ersten Kommunikationseinrichtung (100) und dem Sicherheitsmodul (210) der zweiten Kommunikationseinrichtung (200) ausgetauschte Nachrichten werden von dem Crypto-Prozessor (120, 220) der ersten und zweiten Kommunikationseinrichtung (100, 200) und der Datenverarbeitungseinheit (130, 230) der ersten und zweiten Kommunikationseinrichtung (100, 200) transparent durchgeleitet.

## Beschreibung

Die Erfindung betrifft ein Verfahren zum Übertragen von Nachrichten zwischen einer ersten Kommunikationseinrichtung und einer zweiten Kommunikationseinrichtung mittels Ablaufsteuerung, insbesondere zur Steuerung einer Anlage oder eines Geräts im industriellen Umfeld. Die Erfindung betrifft ferner eine entsprechende Kommunikationseinrichtung sowie eine Vorrichtung zum Übertragen von Nachrichten zwischen einer ersten und einer zweiten Kommunikationseinrichtung.

Kommunikationseinrichtungen zur vertrauenswürdigen industriellen Kommunikation sind aus dem Stand der Technik bekannt. So offenbart beispielsweise die europäische Patentanmeldung EP 3 252 550 A1 eine modulare Sicherheits-Steuerungseinrichtung mit einem Sicherheitsmodul, das zur Bereitstellung oder Ausführung einer kryptographischen Funktionalität ausgebildet und eingerichtet ist. Das Sicherheitsmodul ist mittels einer Datenverbindung über eine Datenschnittstelle mit einem Steuerungs-Grundgerät verbunden. Das Steuerungs-Grundgerät ist zum Zusammenwirken mit dem Sicherheitsmodul zum Erreichen einer Sicherheitsfunktion der Sicherheits-Steuereinrichtung und zur Abfrage einer Identität und/oder Authentizität des Sicherheitsmoduls ausgebildet und eingerichtet. Das Sicherheitsmodul ist lösbar mit dem Steuerungs-Grundgerät verbunden. Die europäische Patentanmeldung EP 3 422 657 A1 beschreibt die Aufteilung und Synchronisation innerhalb eines modular aufgebauten Geräts zur kryptographischen Verarbeitung von Netzverkehr.

Grundsätzlich besteht bei Kommunikationseinrichtungen zur vertrauenswürdigen industriellen Kommunikation das Bedürfnis, dass die zur Sicherung der Kommunikation erforderlichen Informationen, wie zum Beispiel Geheimnisse oder Schlüssel, entsprechend ihrer Schutzanforderungen jeweils nur in den Komponenten sichtbar sein sollen, die diese nutzen. Beispielsweise sollen Geheimnisse zur langfristigen Authentifizierung von Kommunikationsteilnehmern und Protokollabläufe zur Vereinbarung solcher Geheimnisse besser geschützt sein als Schlüssel, die nur für einen begrenzten Zeitraum zur Sicherung einer Verbindung verwendet werden. Aus wirtschaftlichen Gründen wäre es wünschenswert, wenn eine solche Kommunikationseinrichtung basierend auf verfügbaren Standard-(Sicherheits-)Komponenten realisiert werden kann.

Es ist Aufgabe der vorliegenden Erfindung, ein Verfahren zum Übertragen von Nachrichten zwischen zwei Kommunikationseinrichtungen zur vertrauenswürdigen industriellen Kommunikation anzugeben, die verbesserte Sicherheits-Eigenschaften zur Verfügung stellt. Eine weitere Aufgabe besteht darin, eine zur Realisierung eines solchen Verfahrens geeignete Kommunikationseinrichtung sowie ein System, umfassend mehrere Kommunikationseinrichtungen, anzugeben.

Diese Aufgaben werden gelöst durch Merkmale der unabhängigen Ansprüche. Vorteilhafte Ausgestaltungen ergeben sich aus den abhängigen Ansprüchen.

Es wird ein Verfahren zum Übertragen von Nachrichten zwischen einer ersten Kommunikationseinrichtung und einer zweiten Kommunikationseinrichtung mittels Ablaufsteuerung vorgeschlagen. Die erste und die zweite Kommunikationseinrichtung umfassen jeweils folgende Komponenten: eine Datenverarbeitungseinheit mit einer ersten Recheneinheit und einer zweiten Recheneinheit, die jeweils dazu ausgebildet und eingerichtet sind, über eine Netzwerkschnittstelle empfangene oder auszusendende Daten zu verarbeiten; einen Crypto-Prozessor, der zur Bereitstellung oder Ausführung einer kryptographischen Funktionalität für die Datenverarbeitungseinheit ausgebildet und eingerichtet ist; sowie ein Sicherheitsmodul, das zur Bereitstellung oder Ausführung einer kryptographischen Funktionalität für den Crypto-Prozessor ausgebildet und eingerichtet ist.

Zum Übertragen von Nachrichten zwischen der ersten Kommunikationseinrichtung und der zweiten Kommunikationseinrichtung erfolgt die Ablaufsteuerung unter Steuerung durch das Sicherheitsmodul der ersten und zweiten Kommunikationseinrichtung, wobei zwischen dem Sicherheitsmodul der ersten Kommunikationseinrichtung und dem Sicherheitsmodul der zweiten Kommunikationseinrichtung ausgetauschte Nachrichten von dem Crypto-Prozessor der ersten und zweiten Kommunikationseinrichtung und der Datenverarbeitungseinheit der ersten und zweiten Kommunikationseinrichtung transparent durchgeleitet werden.

Mit Hilfe dieses Verfahrens ist es möglich, Nachrichten zwischen der ersten Kommunikationseinrichtung und der zweiten Kommunikationseinrichtung sicher auszutauschen.

Der Begriff "Sicherheit" bezieht sich im Rahmen der vorliegenden Beschreibung im Wesentlichen auf die Sicherheit, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen bzw. beim Datenzugriff gehört zum Begriff "Sicherheit", wie er im Rahmen der vorliegenden Beschreibung verwendet wird.

Die erste Kommunikationseinrichtung und die zweite Kommunikationseinrichtung sind Kommunikationsgeräte zur industriellen Kommunikation, insbesondere zur Steuerung einer Anlage oder eines Geräts im industriellen Umfeld, insbesondere durch die Integration in ein industrielles Gerät (z.B. PLC, Edge-Device, ...). Die steuerbare Anlage oder das steuerbare Gerät kann beispielsweise als eine Produktionsanlage, eine Werkzeugmaschine, ein Roboter, ein autonomes Transportsystem und/oder eine ähnliche Einrichtung, Vorrichtung oder Anlage ausgebildet und eingerichtet sein. Beispielsweise kann die steuerbare Anlage bzw. das steuerbare Gerät für die Fertigungsindustrie, die Prozessindustrie, die Gebäudeautomatisierung und/oder auch die Energieerzeugung und -verteilung, für ein Verkehrssicherungssystem und/oder eine Verkehrssteuerung ausgebildet oder vorgesehen sein.

Unter einer kryptographischen Funktionalität wird allgemein eine Funktion zur Verschlüsselung, zum Schutz der Vertraulichkeit, zum Integritätsschutz und/oder zur Authentifikation von Daten (zum Beispiel Nutzerdaten, Steuerdaten, Konfigurationsdaten oder administrative Daten) verstanden. Die kryptographische Funktionalität des Sicherheitsmoduls kann dabei beispielsweise eine oder mehrere nachfolgend aufgeführte Funktionalitäten umfassen:
- Schlüsselspeicherung
- System- und/oder Nutzer-Authentisierung
- Attestierung
- Verschlüsselung
- Entschlüsselung
- Berechnen einer kryptographischen Prüfsumme (zum Beispiel Signatur)
- Prüfen einer kryptographischen Prüfsumme (zum Beispiel Signatur)
- Schlüsselvereinbarung
- Schlüsselerzeugung
- Erzeugen von Zufallszahlen
- Lizensierung
- Unterstützung von systemischen Überwachungsfunktionen (zum Beispiel Tamper-Schutz, Systemintegrität, usw.)
- Überwachen oder Überwachung von Daten
- Validierung von Daten
- Filterung von Daten.

Die aufgezählten kryptographischen Funktionalitäten können dabei jeweils wieder mit verschiedenen Verfahren oder Kombinationen von Verfahren ausgeführt sein.

Die erste Kommunikationseinrichtung und die zweite Kommunikationseinrichtung sind zum Zusammenwirken mittels Ablaufsteuerung zum Erreichen einer Sicherheitsfunktion und zur Abfrage einer Identität und/oder Authentizität des ersten und zweiten Sicherheitsmoduls ausgebildet und eingerichtet. Die Sicherheitsfunktion kann beispielsweise jede Funktion zur Verschlüsselung, zum Schutz der Vertraulichkeit, zum Integritätsschutz, zur Authentifikation von Daten und/oder Ähnlichem bestehen. Daten können dabei zum Beispiel Nutzerdaten, Steuerdaten, Konfigurationsdaten und/oder administrative Daten sein.

Dabei wird die Sicherheitsfunktion durch ein Zusammenwirken der ersten und der zweiten Kommunikationseinrichtung erreicht. Ein solches Zusammenwirken umfasst das Ausführen der Ablaufsteuerung, welche beispielsweise durch die erste Kommunikationseinrichtung initiiert wird. Ganz allgemein wird unter dem Zusammenwirken der ersten und der zweiten Kommunikationseinrichtung zum Erreichen der Sicherheitsfunktion ein Vorgehen verstanden, bei welchem beide der genannten Kommunikationseinrichtungen mitwirken. Dabei kann eine Mitwirkung im Rahmen des Zusammenwirkens auch schon aus einem Abfragen oder Übertragen einer Information bestehen. Alternativ kann eine Mitwirkung im Rahmen des Zusammenwirkens derart ausgestaltet sein, dass sowohl die erste Kommunikationseinrichtung als auch die zweite Kommunikationseinrichtung einen bezüglich des Sicherheits-Aspektes funktionalen Beitrag zum Erreichen der Sicherheitsfunktion leisten.

Gemäß einer zweckmäßigen Ausgestaltung wird mittels der Ablaufsteuerung ein langfristiges Geheimnis zur Bereitstellung oder Ausführung einer kryptographischen Funktionalität für die Crypto-Prozessoren und/oder für die Datenverarbeitungseinheiten der ersten und zweiten Kommunikationseinrichtung erzeugt. Die durch die Sicherheitsmodule der ersten und der zweiten Kommunikationseinrichtung durchgeführte Ablaufsteuerung ermöglicht es, dass gegenüber den im Datenpfad liegenden Komponenten kein Vertrauen erforderlich ist. Das langfristige Geheimnis kann beispielsweise durch eine Schlüsselvereinbarung entstehen. Das langfristige Geheimnis ist nur den Sicherheitsmodulen der ersten und zweiten Kommunikationseinrichtung bekannt. Der beschriebene Ansatz ermöglicht es, das Protokoll zur Schlüsselvereinbarung und/oder auch zur Authentisierung alleine durch den Tausch oder die Aktualisierung der Sicherheitselemente der ersten und zweiten Kommunikationseinrichtung zu ändern. Die übrigen Komponenten, welche im Datenpfad des Nachrichtenaustauschs zwischen den Sicherheitsmodulen der ersten und zweiten Kommunikationseinrichtung liegen, bleiben davon unberührt, da sie lediglich Hilfsfunktionen erbringen.

Zur Erzeugung des langfristigen Geheimnisses wird eine von der Ablaufsteuerung vorgegebene Anzahl an ersten Nachrichtenzyklen durchlaufen. Ein erster Nachrichtenzyklus umfasst eine Anfragenachricht, die von dem Sicherheitsmodul der ersten Kommunikationseinrichtung erzeugt und an das Sicherheitsmodul der zweiten Kommunikationseinrichtung übertragen wird, und eine optionale Antwortnachricht, die von dem Sicherheitsmodul der zweiten Kommunikationseinrichtung erzeugt und an das Sicherheitsmodul der ersten Kommunikationseinrichtung übertragen wird. Die vorgegebene Anzahl an ersten Nachrichtenzyklen ist größer oder gleich 1, wobei dann, wenn mehr als ein erster Nachrichtenzyklus gemäß dem vorgegebenen Sicherheitsprotokoll durchlaufen wird, eine gerade oder ungerade Anzahl an Nachrichten zwischen dem Sicherheitsmodul der ersten Kommunikationseinrichtung und dem Sicherheitsmodul der zweiten Kommunikationseinrichtung übertragen werden kann. Eine gerade Anzahl an Nachrichten wird übertragen, wenn jeder Nachrichtenzyklus sowohl aus einer Anfragenachricht als auch aus einer Antwortnachricht besteht. Eine ungerade Anzahl an Nachrichten wird dann durchlaufen, wenn der letzte Nachrichtenzyklus lediglich eine Anfragenachricht umfasst, das die Anfragenachricht aussendende Sicherheitsmodul der einen Kommunikationseinrichtung jedoch keine Antwortnachricht vom Sicherheitsmodul der anderen Kommunikationseinrichtung mehr erhält.

Die letzte Nachricht des Sicherheitsprotokolls wird gemäß einer zweckmäßigen Ausgestaltung mit einem durch die Datenverarbeitungseinheit der empfangenden ersten oder zweiten Kommunikationseinrichtung identifizierbaren Kennzeichner versehen, der die Datenverarbeitungseinheit der empfangenden ersten oder zweiten Kommunikationseinrichtung dazu veranlasst, die Weiterleitung der letzten Nachricht an das Sicherheitsmodul der empfangenden ersten oder zweiten Kommunikationseinrichtung zu beenden oder unterbinden. Die letzte Nachricht kann dabei eine Anfragenachricht oder eine Antwortnachricht sein.

Mit dem vorgegebenen Sicherheitsprotokoll wird beispielsweise eine Authentisierung und/oder Vereinbarung des langfristigen Geheimnisses zwischen der ersten und zweiten Kommunikationseinrichtung durchgeführt. Zweckmäßigerweise wird das langfristige Geheimnis in dem Sicherheitsmodul der ersten und zweiten Kommunikationseinrichtung persistent und, optional, verschlüsselt gespeichert. Alternativ kann das persistente und verschlüsselte Speichern des langfristigen Geheimnisses auch in einem durch das Sicherheitsmodul zugeordneten (sicheren) Speicher erfolgen.

Eine weitere zweckmäßige Ausgestaltung sieht vor, dass mittels der Ablaufsteuerung ein Sitzungsschlüssel für die Crypto-Prozessoren der ersten und zweiten Kommunikationseinrichtung durch die Sicherheitsmodule der ersten und zweiten Kommunikationseinrichtung erzeugt wird. Vorzugsweise wird der Sitzungsschlüssel nach der Erzeugung und/oder unter Nutzung des langfristigen Geheimnisses erzeugt. Mit Hilfe des Sitzungsschlüssels ist es möglich, ungesicherte Nachrichten in gesicherte Nachrichten umzuwandeln. Auch eine umgekehrte Wandlung von gesicherten Nachrichten in ungesicherte Nachrichten ist unter Verwendung des Sitzungsschlüssels möglich. Die Nutzung des Sitzungsschlüssels erfolgt insbesondere durch den Crypto-Prozessor der ersten und der zweiten Kommunikationseinrichtung. Die Speicherung des Sitzungsschlüssels kann in einem durch den jeweiligen Crypto-Prozessor der ersten und zweiten Kommunikationseinrichtung zugreifbaren Speicher erfolgen. Insbesondere kann es sich dabei um flüchtigen (nicht persistenten) Speicher handeln.

Eine zweckmäßige Ausgestaltung sieht vor, dass zur Erzeugung des Sitzungsschlüssels eine von der Ablaufsteuerung vorgegebene Anzahl an zweiten Nachrichtenzyklen durchlaufen wird. Ein jeweiliger zweiter Nachrichtenzyklus umfasst eine Anfragenachricht, die von dem Sicherheitsmodul der ersten Kommunikationseinrichtung erzeugt und an das Sicherheitsmodul der zweiten Kommunikationseinrichtung übertragen wird, und eine optionale Antwortnachricht, die von dem Sicherheitsmodul der zweiten Kommunikationseinrichtung erzeugt und an das Sicherheitsmodul der ersten Kommunikationseinrichtung übertragen wird. Die Erzeugung des Sitzungsschlüssels erfolgt damit in analoger Weise zur Bestimmung des langfristigen Geheimnisses, indem eine Anzahl an Nachrichten zwischen den Sicherheitsmodulen der ersten und der zweiten Kommunikationseinrichtung transparent übertragen werden. Die Anzahl der Nachrichten kann dabei gerade oder ungerade sein.

Zweckmäßigerweise umfasst eine der in dem zweiten Nachrichtenzyklus übertragenen Nachrichten ein erstes Merkmal, das den Crypto-Prozessor der sendenden ersten oder zweiten Kommunikationseinrichtung dazu veranlasst, das erste Merkmal aus der Nachricht des Sicherheitsmoduls der sendenden ersten oder zweiten Kommunikationseinrichtung vor der Weiterleitung als den Sitzungsschlüssel zu speichern und optional aus der Nachricht zu entfernen. Mit anderen Worten wird der Sitzungsschlüssel von einem der Sicherheitsmodule der ersten oder zweitem Kommunikationseinrichtung in einer Nachricht durch das erste Merkmal markiert, wobei durch das Vorhandensein des ersten Merkmals der Crypto-Prozessor in die Lage versetzt wird, die ansonsten transparente Nachricht zu verarbeiten.

Eine weitere zweckmäßige Ausgestaltung sieht vor, dass die erste und die zweite Kommunikationseinrichtung jeweils eine sichere Schnittstelle umfassen, die zur Bereitstellung und zum Empfang von Nutzerinteraktionen sowie zum Empfang von Nachrichten von dem Crypto-Prozessor oder dem Sicherheitsmodul und zum Übertragen von Nachrichten an das Sicherheitsmodul oder den Crypto-Prozessor ausgebildet und eingerichtet ist, wobei eine an der sicheren Schnittstelle empfangene Nachricht, insbesondere des ersten oder zweiten Nachrichtenzyklus, die ein vorgegebenes zweites Merkmal umfasst, eine Interaktion mit dem Nutzer initiiert. Hierdurch ergibt sich eine größere Flexibilität bei der Auswahl des Sicherheitsprotokolls, indem eine sichere Schnittstelle in die Ablaufsteuerung integriert wird. Die sichere Schnittstelle umfasst beispielsweise eine Recheneinheit, die über ein Display und/oder eine Tastatur verfügt und eine Interaktion mit einem Benutzer ermöglicht. Diese ermöglicht den Austausch von Bedienergeheimnissen mit dem Nutzer.

Gemäß einer Ausgestaltung kann eine Weiterleitung der Nachricht erst nach einer positiven Interaktion erfolgen. Insbesondere kann vorgesehen sein, dass die Interaktion die Eingabe eines Bedienergeheimnis über die sichere Schnittstelle erwartet, die in die Nachricht eingefügt wird. Die Interaktion kann auch die Ausgabe einer Information durch die sichere Schnittstelle umfassen, mit der der Benutzer zur Eingabe einer Verifikation einer Prüfsumme aufgefordert wird, wobei die Nachricht nur bei positiver Verifikation weitergeleitet wird. Alternativ kann vorgesehen sein, dass bei einer negativen Interaktion in die Nachricht ein Fehlercode eingefügt wird und die Nachricht an das Sicherheitsmodul und/oder den Crypto-Prozessor weitergeleitet wird. Das Vorhandensein eines Fehlercodes kann dann durch den Empfänger, zum Beispiel das Sicherheitsmodul der empfangenden ersten oder zweiten Kommunikationseinrichtung ausgewertet werden. Alternativ kann bei negativer Interaktion die Nachricht verworfen werden.

Gemäß einem weiteren Aspekt wird eine Kommunikationseinrichtung zum Übertragen von Nachrichten an und zum Empfangen von Nachrichten von einer zweiten Kommunikationseinrichtung mittels Ablaufsteuerung vorgeschlagen. Die Kommunikationseinrichtung ist eine erste Kommunikationseinrichtung und umfasst eine Datenverarbeitungseinheit mit einer ersten Recheneinheit und einer zweiten Recheneinheit, die jeweils dazu ausgebildet und eingerichtet sind, über eine Netzwerkschnittstelle empfangene oder auszusendende Nachrichten zu verarbeiten; einen Crypto-Prozessor, der zur Bereitstellung oder Ausführung einer kryptographischen Funktionalität für die Datenverarbeitungseinheit ausgebildet und eingerichtet ist; und ein Sicherheitsmodul, das zur Bereitstellung oder Ausführung einer kryptographischen Funktionalität für den Crypto-Prozessor ausgebildet und eingerichtet ist. Das Sicherheitsmodul ist dazu ausgebildet und eingerichtet, die Ablaufsteuerung in Interaktion mit einem Sicherheitsmodul der zweiten Kommunikationseinrichtung durchzuführen. Der Crypto-Prozessor und die Datenverarbeitungseinheit sind dazu ausgebildet und eingerichtet, zwischen dem Sicherheitsmodul der ersten Kommunikationseinrichtung und dem Sicherheitsmodul der zweiten Kommunikationseinrichtung ausgetauschte Nachrichten transparent durchzuleiten.

Die vorgeschlagene Kommunikationseinrichtung weist die gleichen Vorteile auf, wie diese vorstehend in Verbindung mit dem erfindungsgemäßen Verfahren beschrieben wurden

Die Kommunikationseinrichtung kann ferner zur Durchführung des Verfahrens gemäß einer oder mehrerer weiterer Ausgestaltungen ausgebildet sein. Insbesondere sind die erste und zweite Kommunikationseinrichtung zur Steuerung einer Anlage oder eines Geräts im industriellen Umfeld durch die Integration in ein industrielles Gerät (z.B. PLC, Edge-Device, ...) ausgebildet.

Gemäß einem dritten Aspekt der Erfindung wird eine Vorrichtung zum Übertragen von Nachrichten zwischen einer ersten Kommunikationseinrichtung und einer zweiten Kommunikationseinrichtung mittels Ablaufsteuerung vorgeschlagen, wobei die erste und die zweite Kommunikationseinrichtung gemäß einer oder mehrerer hierin beschriebener Ausführungsformen ausgebildet sind.

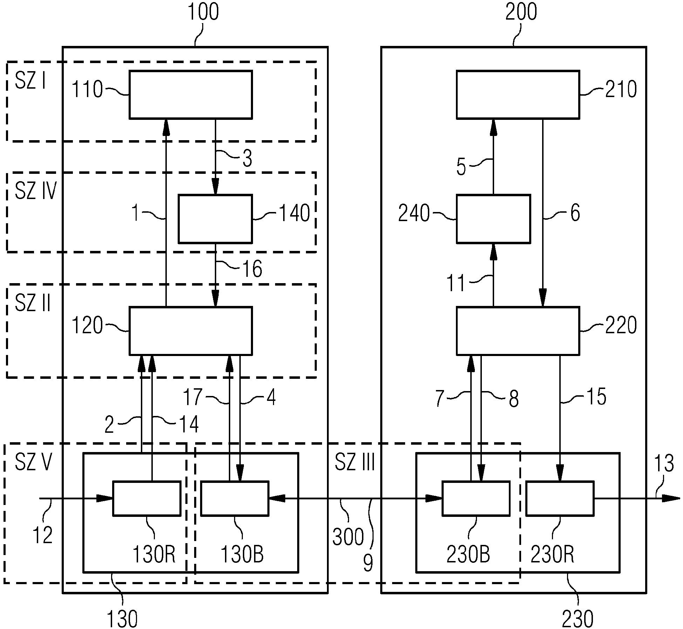

Die Erfindung wird nachfolgend näher anhand eines Ausführungsbeispiels in der Zeichnung erläutert.

Die einzige Figur zeigt eine schematische Darstellung einer Vorrichtung zum Übertragen zwischen zwei Kommunikationseinrichtungen zur industriellen Kommunikation mit jeweiligen an der Kommunikation beteiligten Komponenten und deren Zuordnung zu einer Sicherheitszone.

Die Figur zeigt eine erste Kommunikationseinrichtung 100 und eine zweite Kommunikationseinrichtung 200, die zum gegenseitigen Datenaustausch über eine Kommunikationsverbindung 300 eingerichtet sind. Die erste Kommunikationseinrichtung 100 und die zweite Kommunikationseinrichtung 200 sind Kommunikationskomponenten zur vertrauenswürdigen industriellen Kommunikation und wirken mit z.B. zur Steuerung einer Anlage oder eines Geräts im industriellen Umfeld. Die Kommunikationsverbindung 300 kann leitungsgebunden (Z.B. Ethernet, Busleitung, optisch, elektrisch, usw.) oder drahtlos sein.

Die erste Kommunikationseinrichtung 100 umfasst ein Sicherheitsmodul 110, einen Crypto-Prozessor 120, eine Datenverarbeitungseinheit 130 mit einer ersten Recheneinheit 130R und einer ersten Recheneinheit 130B sowie eine (lediglich optionale) sichere (Benutzer-)Schnittstelle 140. Zwischen den einzelnen Komponenten der ersten Kommunikationseinrichtung 100 vorhandene logische Datenpfade zwischen jeweils zwei Komponenten sind mit Pfeilen und zugehörigen arabischen Ziffern gekennzeichnet. Diese logischen Datenpfade werden nachfolgend näher im Detail erläutert. Die tatsächliche physische Ausprägung der logischen Datenpfade zwischen den Komponenten der ersten Kommunikationseinrichtung 100 ist nicht von Bedeutung und kann bei der Implementierung jeweiliger Anforderungen entsprechend gewählt werden, beispielsweise gemäß UART, PCIe, MII.

Die zweite Kommunikationseinrichtung 200 umfasst die gleichen Komponenten wie die erste Kommunikationseinrichtung 100, nämlich ein Sicherheitsmodul 210, einen Crypto-Prozessor 220, eine Datenverarbeitungseinheit 230 mit einer ersten Recheneinheit 230R und einer zweiten Recheneinheit 230B sowie eine (wiederum lediglich optionale) sichere (Benutzer-)Schnittstelle 240. Ebenso sind logische Datenpfade zwischen jeweils zwei Komponenten der zweiten Kommunikationseinrichtung 200 mit Pfeilen und zugeordneten arabischen Ziffern gekennzeichnet. Auch hier ist die tatsächliche physische Ausprägung der Datenpfade nicht von Bedeutung und wird bei der Implementierung der jeweiligen Anforderungen entsprechend gewählt.

Ziel ist die sichere Übertragung von Nachrichten zwischen der ersten Kommunikationseinrichtung 100 und der zweiten Kommunikationseinrichtung 200 über die Kommunikationsverbindung 300, welche als logischer Datenpfad "9" bezeichnet ist, wobei Nachrichten von der ersten Kommunikationseinrichtung 100 an die zweite Kommunikationseinrichtung 200, und umgekehrt, übertragen werden können.

Die ersten Recheneinheiten 130R, 230R der ersten und der zweiten Kommunikationseinrichtung 100, 200 sind für die schnelle Verarbeitung von ungesicherten Nachrichten, z.B. Ethernet-Frames, ausgebildet. Die zweiten Recheneinheiten 130B, 230B der ersten und der zweiten Kommunikationseinrichtung 100, 200 sind für die schnelle Verarbeitung von gesicherten Nachrichten, die mit einem (durch das vorgeschlagene Verfahren zu erzeugenden) Sitzungsschlüssel SK geschützt sind, ausgelegt. Der Sitzungsschlüssel SK wird auch als "Session Key" bezeichnet. Die erste Recheneinheit 130R und die zweite Recheneinheit 130B der ersten Kommunikationseinrichtung 100 bzw. die erste Recheneinheit 230R und die zweite Recheneinheit 230B der zweiten Kommunikationseinrichtung 200 können auf einer gemeinsamen Recheneinheit realisiert sein. Gegebenenfalls können die erste und die zweite Recheneinheit durch unterschiedliche Kerne (cores) voneinander separiert sein. Die Datenverarbeitungseinheit 130 bzw. 230 wird auch als "Data Plane Processor" bezeichnet.

Die Crypto-Prozessoren 120, 220 der ersten und der zweiten Kommunikationseinrichtung 100, 200 sind für die schnelle Verarbeitung von Massendaten (sog. "bulk data") mit einem kryptographischen Algorithmus, beispielsweise zur authentisierten Verschlüsselung, ausgelegt. Die Crypto-Prozessoren 120, 220 der ersten und zweiten Kommunikationseinrichtung 100, 200 benötigen zur Durchführung ihrer Funktion, der Sicherung, Ver- und Entschlüsselung sowie Prüfung geeignetes Schlüsselmaterial, nämlich den bereits erwähnten Sitzungsschlüssel SK. Dieser wird in der nachfolgend beschriebenen Weise mit Hilfe einer Ablaufsteuerung erzeugt. Zur authentisierten Verschlüsselung kann ein Algorithmus wie beispielsweise AES-GCM verwendet werden. Die Crypto-Prozessoren 120, 220 können beispielsweise jeweils durch ein FPGA oder einen ASIC realisiert sein.

In einer möglichen Variante können der Crypto-Prozessor 120, 220 und die Datenverarbeitungseinheit 130, 230 einer jeweiligen Kommunikationseinrichtung 100, 200 auch gemeinsam auf einem FPGA realisiert sein.

Die lediglich optionale sichere Schnittstelle 140 bzw. 240 der ersten und zweiten Kommunikationseinrichtung 100, 200 ist beispielsweise als Mikrocontroller ausgebildet, der über ein Display und/oder eine Tastatur verfügt, um eine Nutzerinteraktion vornehmen zu können. Hierzu kann z.B. auf dem Display eine Information angezeigt werden, mit der ein Benutzer zur Eingabe einer Information aufgefordert wird. Die Eingabe der Information erfolgt dann über das Eingabemittel, z.B. über eine Tastatur, ein Zeigegerät oder einen Touchscreen.

Die Sicherheitsmodule 110, 210 dienen zur Bereitstellung oder Ausführung einer kryptographischen Funktionalität für den jeweiligen Crypto-Prozessor 120, 220 der betreffenden ersten oder zweiten Kommunikationseinrichtung 100, 200. Die Sicherheitsmodule 110, 210 sind beispielsweise als programmierbare Security Controller, z.B. ein Java-Card Chip, ausgebildet.

In einer weiteren Implementierung ist es möglich, das Sicherheitselement und/oder die sichere Schnittstelle einer jeweiligen ersten oder zweiten Kommunikationseinrichtung 100, 200 z.B. gemeinsam mit dem zugeordneten Crypto-Prozessor zu realisieren.

Die genannten Komponenten können jeweils durch diskrete Hardwarebaugruppen realisiert sein oder unter Verwendung geeigneter logischer Isolationsmechanismen auf gemeinsamen Hardwarebaugruppen implementiert werden.

Die grundsätzliche Funktion bei der Übertragung von Nachrichten zwischen der ersten und der zweiten Kommunikationseinrichtung 100, 200 ist wie folgt.

Die erste Recheneinheit 130R der ersten Kommunikationseinrichtung 100 erhält eingehende, unsichere Nachrichten aus einem nicht näher dargestellten Quellnetz über den logischen Datenpfad "12" und leitet diese Nachrichten über den logischen Datenpfad "14" an den Crypto-Prozessor 120 weiter. Die zweite Recheneinheit 130B der Datenverarbeitungseinheit 130 der ersten Kommunikationseinrichtung 100 erhält die von dem Crypto-Prozessor 120 mit dem Sitzungsschlüssel SK gesicherten, d.h. mit dem Sitzungsschlüssel SK verschlüsselten, Nachrichten über den logischen Datenpfad "4" zurück und leitet diese über den logischen Datenpfad "9" an die zweite Recheneinheit 230B der Datenverarbeitungseinheit 230 der zweiten Kommunikationseinrichtung 200 weiter. Die zweite Recheneinheit 230B der Datenverarbeitungseinheit 230 nimmt die gesicherten (verschlüsselten) Nachrichten entgegen und leitet sie über den logischen Datenpfad "7" an den Crypto-Prozessor 220 weiter. Die erste Recheneinheit 230R der Datenverarbeitungseinheit 230 erhält die geprüften, d.h. mit Hilfe des Sitzungsschlüssels SK entschlüsselten und/oder authentifizierten, Nachrichten über den logischen Datenpfad "15" zurück und leitet sie über den logischen Datenpfad "13" an ein nicht näher dargestelltes Zielnetz weiter.

Die Crypto-Prozessoren 120, 220 der ersten und der zweiten Kommunikationseinrichtung 100, 200 benötigen für die Sicherung, Ver- und Entschlüsselung sowie Prüfung den Sitzungsschlüssel SK, der unter Verwendung eines langfristigen Geheimnisses G nach erfolgreicher wechselseitiger Authentisierung der ersten und der zweiten Kommunikationseinrichtung 100, 200 erzeugt wird.

Um die sichere Übertragung von Nachrichten über den logischen Datenpfad "9" realisieren zu können, sind die erste und die zweite Kommunikationseinrichtung 100, 200 jeweils in verschiedene Sicherheitszonen unterteilt, wobei der Einfachheit halber die Sicherheitszonen SZ I bis SZ V zeichnerisch lediglich für die erste Kommunikationseinrichtung 100 dargestellt sind.

In der Sicherheitszone SZ I sind langfristige Geheimnisse persistent gespeichert, welche beispielsweise zur Erzeugung des Sitzungsschlüssels SK genutzt werden. Die Sicherheitszone SZ I ermöglicht eine sichere Ausführungsumgebung für wechselseitige Authentifizierung der Kommunikationseinrichtungen und Schlüsselaustausch. Mit Hilfe der Sicherheitszone SZ I erfolgt die Bereitstellung von Geheimnissen für den Crypto-Prozessor in Form des Sitzungsschlüssels SK. Darüber hinaus werden in der Sicherheitszone SZ I Bedienergeheimnisse U verarbeitet. In der Sicherheitszone SZ I ist lediglich das jeweilige Sicherheitsmodul 110 bzw. 210 der ersten oder zweiten Kommunikationseinrichtung 100, 200 enthalten.

Die Sicherheitszone SZ II umfasst den Crypto-Prozessor 120 bzw. 220 der ersten bzw. zweiten Kommunikationseinrichtung 100, 200. In der Sicherheitszone SZ II erfolgt die Umwandlung von ungesicherten Nachrichten in gesicherte Nachrichten unter Verwendung des Sitzungsschlüssels SK, und umgekehrt.

Die Sicherheitszone SZ III schließt die beiden zweiten Recheneinheiten 130B, 230B der ersten und zweiten Kommunikationseinrichtung 100, 200 sowie die Kommunikationsverbindung 300 ein. In der Sicherheitszone SZ III werden Nachrichten gesichert übertragen.

Die Sicherheitszone SZ IV umfasst die jeweilige sichere Schnittstelle 140, 240 der betreffenden ersten oder zweiten Kommunikationseinrichtung 100, 200. In der Sicherheitszone SZ IV erfolgt ein Austausch von Bedienergeheimnissen U mit einem Nutzer.

Die Sicherheitszone SZ V umfasst die jeweilige erste Recheneinheit 130R, 230R der betreffenden ersten oder zweiten Datenverarbeitungseinheit 130, 230 der jeweiligen Kommunikationseinrichtung 100, 200. In der Sicherheitszone SZ V werden Klartextnachrichten, d.h. ungesicherte und unverschlüsselte Nachrichten verarbeitet.

Die Sicherheitszonen SZ I, SZ II, SZ III, SZ IV und SZ V der Kommunikationseinrichtungen 100, 200 sind konzeptionell gleich, jedoch nicht zusammenhängend.

Übliche Security Controller, welche auf dem Standard ISO 7816-3 basieren, realisieren üblicherweise ein Command/Response-Protokoll (d.h. ein Anfrage/Antwort-Protokoll). Derartige Security Controller können von sich aus keine Kommunikation aufbauen, sondern liefern jeweils Antworten auf ein empfangenes Kommando. Die Steuerung eines Kontrollflusses erfolgt daher von der Recheneinheit aus. Die Authentisierung und Aushandlung von Geheimnissen soll jedoch durch ein Endto-End (E2E)-Sicherheitsprotokoll zwischen den Sicherheitsmodulen 110, 210 der ersten und der zweiten Kommunikationseinrichtung 100, 200 erfolgen. Ziel dieses Sicherheitsprotokolls ist die Bereitstellung des Sitzungsschlüssels SK für die beiden Crypto-Prozessoren 120, 220 der ersten und der zweiten Kommunikationseinrichtung 100, 200. Dies ist wie nachfolgend beschrieben realisiert.

Das Sicherheitsprotokoll zur Erzeugung eines langfristigen Geheimnisses G erfolgt mittels einer Ablaufsteuerung unter der Kontrolle der beiden Sicherheitsmodule 110, 210, wobei zwischen dem Sicherheitsmodul 110 der ersten Kommunikationseinrichtung 100 und dem Sicherheitsmodul 210 der zweiten Kommunikationseinrichtung 200 ausgetauschte Nachrichten von den anderen im Datenpfad liegenden Komponenten (Crypto-Prozessor 120, Datenverarbeitungseinheit 130 (insbesondere erste Recheneinheit 130B), Datenverarbeitungseinheit 230 (insbesondere zweite Recheneinheit 230B) und Crypto-Prozessor 220), transparent durchgeleitet werden.

Das Sicherheitsprotokoll wird durch die Datenverarbeitungseinheit 130 der ersten Kommunikationseinrichtung 100 durch ein vorgegebenes Kommando gestartet. Das Kommando wird über die logischen Pfade "2" und "1" von der Datenverarbeitungseinheit 130 an das Sicherheitsmodul 110 der ersten Kommunikationseinrichtung 100 übertragen. Das Sicherheitsmodul 110 erzeugt eine Antwort, die über die logischen Pfade "3", "16" und "4" an die zweite Recheneinheit 130B der Datenverarbeitungseinheit 130 zurückgeleitet wird. Von der zweiten Recheneinheit 130B wird die Antwort transparent über die logischen Datenpfade "9", "7", "11" und "5" an das Sicherheitselement 210 der zweiten Kommunikationseinrichtung 200 weitergeleitet.

Das Sicherheitsmodul 210 in der zweiten Kommunikationseinrichtung 200 interpretiert die Antwort als Kommando und erzeugt seinerseits eine Antwort, die über die logischen Pfade "6", "8", "9", "17" und "1" an das Sicherheitsmodul 110 der ersten Kommunikationseinrichtung 100 zurückgeleitet wird. Das Kommando und die darauf erzeugte Antwort wird als erster Nachrichtenzyklus bezeichnet. Dieser beschriebene Prozess wird bis zur Beendigung des Sicherheitsprotokolls fortgesetzt, wobei die Anzahl der ersten Nachrichtenzyklen durch die Ablaufsteuerung bzw. das Sicherheitsmodul 110 der ersten Kommunikationseinrichtung 100 festgelegt ist.

Zur Beendigung des Sicherheitsprotokolls kann vorgesehen sein, dass als letzte Nachricht keine Antwort von der zweiten Kommunikationseinrichtung 200 an die erste Kommunikationseinrichtung 100, sondern ein Kommando von der ersten Kommunikationseinrichtung 100 an die zweite Kommunikationseinrichtung 200 übertragen wird. Die Anzahl der in einer Vielzahl an ersten Nachrichtenzyklen ausgetauschten Nachrichten (umfassend ein Kommando und eine optionale Antwort) kann demgemäß gerade oder ungerade sein.

Alternativ kann vorgesehen sein, sofern bereits ein sicherer Kommunikationskanal zwischen der ersten und der zweiten Kommunikationseinrichtung 100, 200 besteht, den transparenten Austausch der Nachrichten zwischen den Sicherheitsmodulen 110, 210 jeweils über die ersten Recheneinheiten 130R, 230R der Datenverarbeitungseinheiten 130, 230 vorzunehmen. Diese Realisierung kann beispielsweise bei Sicherheitsprotokollen zur Schlüsselerneuerung angewandt werden.

Am Ende des Sicherheitsprotokolls liegt ein langfristiges Geheimnis G vor, dass in den Sicherheitsmodulen 110, 210 persistent und verschlüsselt abgelegt wird.

Die auf die beschriebene Art zwischen den beiden Sicherheitsmodulen 110, 210 ausgetauschten Nachrichten sind für die dazwischenliegenden Komponenten vollständig transparent. Dabei sind folgende Ausnahmen vorgesehen, die in der Folge die Erzeugung des Sitzungsschlüssels SK ermöglichen:
1. Die jeweils letzte im Ablauf des Sicherheitsprotokolls benötigte Nachricht wird durch das Senden des Sicherheitsmoduls (110 oder 210) so markiert, dass die Datenverarbeitungseinheit 130 oder 230 den wechselseitigen Austausch beendet. In der zuvor ablaufenden Kommunikation wurde dabei das langfristige Geheimnis G ermittelt.
2. Die Bestimmung des Sitzungsschlüssels SK erfolgt auf entsprechende Weise. Die Erzeugung des Sitzungsschlüssels erfolgt dabei unter Nutzung des langfristigen Geheimnisses und damit nach der Erzeugung des langfristigen Geheimnisses G.
   In dem hierbei durchgeführten zweiten Nachrichtenzyklus kann eine Nachricht (z.B. Antwortnachricht) ein Merkmal enthalten, das von dem in der Kommunikations-Kette durchlaufenen Crypto-Prozessor (120 oder 220) beim Empfang über den logischen Datenpfad "16" bzw. "6" erkannt wird und den Crypto-Prozessor anweist, einen Teil der Antwort vor der Weitergabe über den Datenpfad "4" bzw. "8" zu entfernen. Der zu entfernende Teil kann der geheime Sitzungsschlüssel SK sein. Durch diese Vorgehensweise kann verhindert werden, dass der Sitzungsschlüssel SK, der nur zwischen dem Sicherheitselement 110 und dem Crypto-Prozessor 120 bzw. 210 und 220 geteilt werden soll, außerhalb der Sicherheitszonen SZ I und SZ II bekannt wird. Der Fluss der Command/Response-Paare zwischen Sicherheitsmodul und Datenverarbeitungseinheit einer jeweiligen Kommunikationseinrichtung wird dadurch jedoch nicht beeinflusst.
3. Eine Nachricht (Kommando) in dem ersten oder zweiten Nachrichtenzyklus kann optional ein Merkmal enthalten, das von der sicheren Schnittstelle 140, 240 bei der Übertragung zwischen dem Crypto-Prozessor 120 bzw. 220 und dem Sicherheitselement 110 bzw. 210 (über die logischen Datenpfade "3" bzw. "11") erkannt wird und zu einer Interaktion mit einem Nutzer führt. Im Rahmen der Interaktion kann ein Bedienergeheimnis U in die Nachricht eingefügt werden. Alternativ kann der Benutzer zur Verifikation einer Prüfsumme aufgefordert werden, bevor die Nachricht an das Sicherheitselement 210 bzw. den Crypto-Prozessor 120 weitergegeben wird. Ein Abbruch durch den Nutzer kann dem Sicherheitselement 210 beispielsweise durch das Einfügen eines Fehlercodes in die weitergeleitete Nachricht (über den Datenpfad "5") angezeigt werden. Alternativ kann eine solche, negativ verifizierte Nachricht auch verworfen werden.

Die Einbindung der sicheren Schnittstellen 140, 240 oder zusätzlicher sicherer Schnittstellen in die Datenpfade "1" bzw. "6" (nicht dargestellt) kann eine größere Flexibilität bei der Auswahl des Sicherheitsprotokolls ermöglichen. Dies bedeutet, die sicheren Schnittstellen im Datenpfad "1" und "3", "16" bzw. "5", "11" und "6" können physikalisch wiederum getrennt sein. Es ist insbesondere eine bessere Anpassung an das gewählte Sicherheitsprotokoll möglich. Optional kann in einer anderen Ausgestaltung die sichere Schnittstelle 140, 240 in den logischen Datenpfaden "3" und "16" bzw. "11" und "5" entfallen.

Die sichere Schnittstelle 140, 240 bzw. zusätzlich sichere Schnittstellen kann bzw. können zur Anzeige und/oder Eingabe von Daten durch einen Nutzer ausgebildet sein und verwendet werden. Insbesondere kann ein Abbruch des Ablaufs durch den Benutzer herbeigeführt werden. Sofern für die Interaktion mit dem Nutzer keine Vertrauenswürdigkeit erforderlich ist, können jeweilige Platzhalter im Sicherheitsprotokoll auch an einer anderen Stelle verarbeitet werden.

Als Ende-zu-Ende (E2E)-Sicherheitsprotokoll kann beispielsweise SRP, OPAQUE, SDS, BLE4.2 Security und dergleichen verwendet werden. Abhängig vom Sicherheitsprotokoll ist gegenüber den im Kommunikationspfad der beiden Sicherheitsmodule 110, 210 liegenden Komponenten kein Vertrauen notwendig. Mit dem beschriebenen Verfahren ist es möglich, das Sicherheitsprotokoll zur Authentisierung und/oder Schlüsselvereinbarung alleine durch den Tausch oder die Aktualisierung der Sicherheitsmodule 110, 210 zu ändern. Die übrigen Komponenten bleiben unberührt, da sie für die Durchführung des Sicherheitsprotokolls lediglich Hilfsfunktionen erbringen.

Die beschriebene Architektur ermöglicht einen Datenaustausch zwischen verfügbaren Standardkomponenten, insbesondere Security Controllern, welche entsprechend der Norm ISO 7816 ausgebildet sind, entsprechend eines strikten Sicherheitszonenkonzepts. Die vorgeschlagene Architektur, erlaubt es, kryptographische Verfahren und/oder Implementierungen durch Tausch eines Bauteils, insbesondere des Sicherheitsmoduls, auszutauschen, ohne jedoch weitere Komponenten in den Kommunikationseinrichtungen anpassen zu müssen.

Das erfindungsgemäße Vorgehen basiert darauf, die Ablaufsteuerung unter Steuerung der Sicherheitsmodule der beiden miteinander kommunizierenden Kommunikationseinrichtungen vorzunehmen, wobei eine zwischen den Sicherheitsmodulen ablaufende Kommunikation transparent erfolgt. Da die Kommunikationspfade immer durch die beteiligten Crypto-Prozessoren der beiden Kommunikationseinrichtungen verlaufen, muss ein zu erzeugender Sitzungsschlüssel nicht über die ungesicherte, erste Recheneinheit der Datenverarbeitungseinheiten der beiden Kommunikationseinrichtungen geführt werden. Hierdurch kann eine höhere Sicherheit realisiert werden. Ferner ist die sichere Schnittstelle im Kommunikationspfad zwischen dem Crypto-Prozessor und dem Sicherheitsmodul einer jeweiligen Kommunikationseinrichtung angeordnet, wodurch Daten und/oder Nutzer-Informationen in den Datenstrom eingefügt werden können, ohne dass die Information auf dem niedrigen Sicherheitsniveau der ersten Recheneinheit der Datenverarbeitungseinheit sichtbar wären.

## Patentansprüche

1. Verfahren zum Übertragen von Nachrichten zwischen einer ersten Kommunikationseinrichtung (100) und einer zweiten Kommunikationseinrichtung (200) mittels Ablaufsteuerung, wobei die erste und die zweite Kommunikationseinrichtung (100, 200) jeweils umfassen:
- eine Datenverarbeitungseinheit (130, 230) mit einer ersten Recheneinheit (130R, 230R) und einer zweiten Recheneinheit (130B, 230B), die jeweils dazu ausgebildet und eingerichtet sind, über eine Netzwerkschnittstelle empfangene oder auszusendende Nachrichten zu verarbeiten;
- einen Crypto-Prozessor (120, 220), der zur Bereitstellung oder Ausführung einer kryptographischen Funktionalität für die Datenverarbeitungseinheit (130, 230) ausgebildet und eingerichtet ist;
- ein Sicherheitsmodul (110, 210), das zur Bereitstellung oder Ausführung einer kryptographischen Funktionalität für den Crypto-Prozessor (120, 220) ausgebildet und eingerichtet ist;
wobei zur Durchführung des Verfahrens die Ablaufsteuerung unter Steuerung durch das Sicherheitsmodul (110, 210) der ersten und zweiten Kommunikationseinrichtung (100, 200) erfolgt, wobei zwischen dem Sicherheitsmodul (110) der ersten Kommunikationseinrichtung (100) und dem Sicherheitsmodul (210) der zweiten Kommunikationseinrichtung (200) ausgetauschte Nachrichten von dem Crypto-Prozessor (120, 220) der ersten und zweiten Kommunikationseinrichtung (100, 200) und der Datenverarbeitungseinheit (130, 230) der ersten und zweiten Kommunikationseinrichtung (100, 200) transparent durchgeleitet werden.

2. Verfahren nach Anspruch 1, bei dem mittels der Ablaufsteuerung ein langfristiges Geheimnis (G) zur Bereitstellung oder Ausführung einer kryptographischen Funktionalität für die Crypto-Prozessoren (120, 220) und/oder für die Datenverarbeitungseinheiten (130, 230) der ersten und zweiten Kommunikationseinrichtung (100, 200) erzeugt wird.

3. Verfahren nach Anspruch 2, bei dem zur Erzeugung des langfristigen Geheimnisses (G) gemäß einem vorgegebenen Sicherheitsprotokoll eine von der Ablaufsteuerung vorgegebene Anzahl an ersten Nachrichtenzyklen, umfassend eine Anfragenachricht, die von dem Sicherheitsmodul (110) der ersten Kommunikationseinrichtung (100) erzeugt und an das Sicherheitsmodul (210) der zweiten Kommunikationseinrichtung (200) übertragen wird, und eine optionale Antwortnachricht, die von dem Sicherheitsmodul (210) der zweiten Kommunikationseinrichtung (200) erzeugt und an das Sicherheitsmodul (110) der ersten Kommunikationseinrichtung (100) übertragen wird, durchlaufen wird.

4. Verfahren nach Anspruch 3, bei dem die letzte Nachricht des Sicherheitsprotokolls mit einem durch die Datenverarbeitungseinheit (130, 230) der empfangenden ersten oder zweiten Kommunikationseinrichtung (100, 200) identifizierbaren Kennzeichner versehen wird, das die Datenverarbeitungseinheit (130, 230) der empfangenden ersten oder zweiten Kommunikationseinrichtung (100, 200) dazu veranlasst, die Weiterleitung der letzten Nachricht an das Sicherheitsmodul (110, 210) der empfangenden ersten oder zweiten Kommunikationseinrichtung (100, 200) zu beenden oder unterbinden.

5. Verfahren nach Anspruch 3 oder 4, bei dem die letzte Nachricht eine Anfragenachricht oder eine Antwortnachricht ist.

6. Verfahren nach einem der Ansprüche 2 bis 5, bei dem das langfristige Geheimnis (G) in dem Sicherheitsmodul (110, 210) der ersten und zweiten Kommunikationseinrichtung (100, 200) persistent und verschlüsselt gespeichert wird.

7. Verfahren nach einem der vorhergehenden Ansprüche, bei dem mittels der Ablaufsteuerung ein Sitzungsschlüssel (SK) für die Crypto-Prozessor (120, 220) der ersten und zweiten Kommunikationseinrichtung (100, 200) durch die Sicherheitsmodule (110, 210) der ersten oder zweiten Kommunikationseinrichtung (100, 200) erzeugt wird.

8. Verfahren nach Anspruch 7, bei dem der Sitzungsschlüssel (SK) nach der Erzeugung und/oder unter Nutzung des langfristigen Geheimnisses (G) erzeugt wird.

9. Verfahren nach Anspruch 7 oder 8, bei dem zur Erzeugung des Sitzungsschlüssels (SK) eine von der Ablaufsteuerung vorgegebene Anzahl an zweiten Nachrichtenzyklen, umfassend eine Anfragenachricht, die von dem Sicherheitsmodul (110) der ersten Kommunikationseinrichtung (100) erzeugt und an das Sicherheitsmodul (210) der zweiten Kommunikationseinrichtung (200) übertragen wird, und eine optionale Antwortnachricht, die von dem Sicherheitsmodul (210) der zweiten Kommunikationseinrichtung (200) erzeugt und an das Sicherheitsmodul (110) der ersten Kommunikationseinrichtung (100) übertragen wird, durchlaufen wird.

10. Verfahren nach Anspruch 9, bei dem eine der in dem zweiten Nachrichtenzyklus übertragenen Nachrichten ein erstes Merkmal umfasst, das den Crypto-Prozessor (120, 220) der sendenden ersten oder zweiten Kommunikationseinrichtung (100, 200) dazu veranlasst, das erste Merkmal aus der Nachricht des Sicherheitsmoduls (110, 210) der sendenden ersten oder zweiten Kommunikationseinrichtung (100, 200) vor der Weiterleitung als den Sitzungsschlüssel (SK) zu speichern und optional aus der Nachricht zu entfernen.

11. Verfahren nach einem der vorhergehenden Ansprüche, bei dem die erste und die zweite Kommunikationseinrichtung (100, 200) jeweils eine sichere Schnittstelle (140, 240) umfassen, die zur Bereitstellung und zum Empfang von Nutzerinteraktionen sowie zum Empfang von Nachrichten von dem Crypto-Prozessor (120, 220) oder dem Sicherheitsmodul (110, 210) und zum Übertragen von Nachrichten an das Sicherheitsmodul (110, 210) oder den Crypto-Prozessor (120, 220) ausgebildet und eingerichtet ist, wobei eine an der sicheren Schnittstelle (140, 240) empfangene Nachricht, insbesondere des ersten oder zweiten Nachrichtenzyklus, die ein vorgegebenes zweites Merkmal umfasst, eine Interaktion mit einem Nutzer initiiert.

12. Verfahren nach Anspruch 11, bei dem die Weiterleitung der Nachricht erst nach positiver Interaktion erfolgt.

13. Verfahren nach Anspruch 11 oder 12, bei dem die Interaktion die Eingabe eines Bedienergeheimnis über die sichere Schnittstelle (140, 240) erwartet, die in die Nachricht eingefügt wird.

14. Verfahren nach Anspruch 11 oder 12, bei dem die Interaktion die Ausgabe einer Information durch die sichere Schnittstelle (140, 240) umfasst, mit der der Benutzer zur Eingabe einer Verifikation einer Prüfsumme aufgefordert wird, wobei die Nachricht nur bei positiver Verifikation weitergeleitet wird.

15. Verfahren nach Anspruch 11, bei dem bei einer negativen Interaktion in die Nachricht ein Fehlercode eingefügt wird und die Nachricht an das Sicherheitsmodul (110, 210) und/oder den Crypto-Prozessor (120, 220) weitergeleitet wird.

16. Kommunikationseinrichtung (100) zum Übertragen von Nachrichten an und Empfangen von Nachrichten von einer zweiten Kommunikationseinrichtung (200) mittels Ablaufsteuerung, wobei die Kommunikationseinrichtung (100) eine erste Kommunikationseinrichtung ist und umfasst:
- eine Datenverarbeitungseinheit (130) mit einer ersten Recheneinheit (130R) und einer zweiten Recheneinheit (130B), die jeweils dazu ausgebildet und eingerichtet sind, über eine Netzwerkschnittstelle empfangene oder auszusendende Nachrichten zu verarbeiten;
- einen Crypto-Prozessor (120), der zur Bereitstellung oder Ausführung einer kryptographischen Funktionalität für die Datenverarbeitungseinheit (130) ausgebildet und eingerichtet ist;
- ein Sicherheitsmodul (110), das zur Bereitstellung oder Ausführung einer kryptographischen Funktionalität für den Crypto-Prozessor (120) ausgebildet und eingerichtet ist;
wobei
- das Sicherheitsmodul (110) dazu ausgebildet und eingerichtet ist, die Ablaufsteuerung in Interaktion mit einem Sicherheitsmodul (210) der zweiten Kommunikationseinrichtung (200) durchzuführen, und
- der Crypto-Prozessor (120) und die Datenverarbeitungseinheit (130) dazu ausgebildet und eingerichtet sind, zwischen dem Sicherheitsmodul (110) der ersten Kommunikationseinrichtung (100) und dem Sicherheitsmodul (210) der zweiten Kommunikationseinrichtung (200) ausgetauschte Nachrichten transparent durchzuleiten.

17. Kommunikationseinrichtung nach Anspruch 16, **dadurch gekennzeichnet, dass** diese zur Durchführung des Verfahrens gemäß einem der Ansprüche 2 bis 15 ausgebildet ist.

18. Kommunikationseinrichtung nach Anspruch 16 oder 17, **dadurch gekennzeichnet, dass** die erste und die zweite Kommunikationseinrichtung (100, 200) zur Steuerung einer Anlage oder eines Geräts im industriellen Umfeld, insbesondere durch die Integration in die Anlage oder das Gerät ausgebildet sind.

19. Vorrichtung zum Übertragen von Nachrichten zwischen einer ersten Kommunikationseinrichtung (100) und einer zweiten Kommunikationseinrichtung (200) mittels Ablaufsteuerung, wobei die erste und die zweite Kommunikationseinrichtung (100, 200) gemäß einem der Ansprüche 16 bis 18 ausgebildet sind.
